# EUROPÄISCHE PATENTSCHRIFT

(11) **EP 2 727 449 B1**
(45) Veröffentlichungstag und Bekanntmachung des Hinweises auf die Patenterteilung: **13.04.2016**
(21) Anmeldenummer: 13005002.4
(22) Anmeldetag: 18.10.2013
(51) Int. Cl.: A01B 71/08, A01C 17/00, E01C 19/20

(54) **Verteilmaschine**
Distribution machine
machine d'épandage

(30) Priorität: 30.10.2012 DE 202012010343 U
(43) Veröffentlichungstag der Anmeldung: 07.05.2014
(73) Patentinhaber: RAUCH Landmaschinenfabrik GmbH, 76547 Sinzheim (DE)
(72) Erfinder: Landsgesell, Elias, 77815 Bühl-Vimbuch (DE)
(74) Vertreter: Lichti - Patentanwälte Partnerschaft mbB

(56) Entgegenhaltungen:
- DE-A1- 10 348 066
- DE-A1-102007 053 550
- DE-A1-102010 036 588
- DE-A1-102010 055 665

## Beschreibung

Die Erfindung betrifft eine Verteilmaschine, insbesondere landwirtschaftliche Streumaschine oder Winterdienststreumaschine, mit wenigstens einem Behälter zur Aufnahme von pulver- und/oder partikelförmigem Gut, wenigstens einer am Boden des Behälters angeordneten Auslauföffnung mit einem Dosierorgan, welches mittels eines Stellorgans auf- und zusteuerbar ist, sowie einem unterhalb des Dosierorgans angeordneten Verteilorgan zum Verteilen des pulver- und/oder partikelförmigen Gutes auf dem Boden.

Verteilmaschinen der vorgenannten Art sind einerseits in Form von landwirtschaftlichen Streumaschinen zum Ausbringen von pulver- oder partikelförmigen Gut, wie insbesondere Dünger oder Saatgut, in vielfältiger Ausgestaltung bekannt, so beispielsweise in gezogener oder von einem Dreipunkt einer Zugmaschine, wie eines Traktors, aufgenommener Bauart. Derartige Verteilmaschinen umfassen einen das zu verteilende Gut aufnehmenden Behälter, an dessen Boden üblicherweise eine oder zwei Auslauföffnungen angeordnet sind, wobei der jeweiligen Auslauföffnung ein Dosierorgan zugeordnet ist, um das auszubringende Gut in der gewünschten Menge - oder genauer: mit dem gewünschten Massenstrom - dem Behälter zu entnehmen. Das Dosierorgan ist mittels eines geeigneten Stellorgans auf- und zusteuerbar, um je nach gewünschter Verteilungsbreite des auszubringenden Gutes auf dem Boden, je nach Fahrgeschwindigkeit und je nach den physikalischen Eigenschaften des Gutes, wie beispielsweise dessen Rieselfähigkeit, den gewünschten Massenstrom einstellen zu können. Unterhalb des Dosierorgans befindet sich ein Verteilorgan, mittels welchem das pulver- oder partikelförmige Gut über die gewünschte Arbeitsbreite verteilt wird. Manche Verteilmaschinen sind überdies mit einer Einrichtung zur Verstellung des Aufgabepunktes des pulver- und/oder partikelförmigen Gutes auf das, insbesondere von einer mit Wurfschaufeln bestückten Verteilerscheibe gebildete, Verteilorgan ausgestattet, wobei der Aufgabepunkt in Bezug auf die Verteilerscheibe radial (insbesondere zu Vergrößerung/Verkleinerung des Streufächers) und/oder in Umfangsrichtung (insbesondere zum Verdrehen des Streufächers etwa um die Drehachse der Verteilerscheibe) verstellbar sein kann. Eine derartige landwirtschaftliche Verteilmaschine ist beispielsweise aus der DE 10 2007 053 550 A1 bekannt.

Im Falle von Winterdienststreumaschinen dient der Behälter vornehmlich zur Aufnahme von in der Regel granulatförmigem Splitt und/oder Streusalz, wobei die Funktion einer solchen Winterdienststreumaschine weitestgehend der einer oben beschriebenen landwirtschaftlichen Streumaschine entspricht.

Beim Ausbringen des zu verteilenden Gutes - sei es in Form von Dünger oder Saatgut auf einem Feld oder sei es in Form von Splitt oder Salz auf einer Straße - werden in aller Regel große Mengen an Partikeln von Erde, Sand, Staub und dergleichen aufgewirbelt, welche insbesondere an die unterhalb des Behälters angeordneten Dosierorgane und deren Stellorgane, aber auch an die Verteilorgane einschließlich deren Lagerung gelangen können, wodurch je nach Beschaffenheit und Größe der Partikel die Funktion beeinträchtigt werden kann. Dies gilt insbesondere in Bezug auf die Dosierorgane bzw. deren Stellorgane sowie - sofern vorhanden - für die Stellglieder einer Einrichtung zur Verstellung des Aufgabepunktes des auszubringenden Gutes auf das Verteilorgan, sofern sich größere Partikel, wie z.B. Steine, dort verklemmen. Darüber hinaus neigt insbesondere das zu verteilende Gut, welches gleichfalls in Pulver- oder Partikelform vorliegt, häufig zur Anreicherung an den unterhalb des Behälters befindlichen Funktionsteilen der vorgenannten Art, wobei insbesondere die meisten festen Düngemittel wie auch Streusalz einen hygroskopischen Charakter besitzen, so dass sie in Verbindung mit Luftfeuchtigkeit oder gar Regen bzw. Schnee(matsch) agglomerieren und mit fortschreitender Ausbringung zunehmend in mehr oder minder harten Agglomeraten den Funktionsteilen anhaften. Dies gilt insbesondere - wenn auch nicht ausschließlich - dann, wenn die Verteilorgane von Streu- bzw. Verteilerscheiben gebildet sind, welche das pulver- oder partikelförmige Gut radial an den Funktionsteilen vorbei fortschleudern.

Die üblicherweise manuelle Entfernung sowohl von Bodenpartikeln als auch insbesondere der Aggregationen von Festdüngemittel oder Splitt bzw. Salz gestaltet sich dabei vor allem in zweierlei Hinsicht als aufwändig, da einerseits die unterhalb des Behälters angeordneten Funktionsteile schwer zugänglich sind, weil der Behälter in der Regel aus Gründen eines einfachen Befüllens und eines geringen Kippmomentes der Verteilmaschine so tief wie möglich auf einem Grundrahmen, welcher ferner die Funktionsteile trägt, montiert ist, andererseits eine Reinigung mittels handelsüblichen Hochdruck- oder Dampfstrahlern problematisch ist, weil die Dosierorgane und insbesondere deren Stellorgane Gefahr laufen beschädigt zu werden, wenn sie direkt von einem solchen Druckstrahl getroffen werden.

Die US 2008/0314420 A1 beschreibt ein kommunales Streufahrzeug mit einem Vorratsbehälter, an dessen offener Unterseite ein Förderband umläuft, welches das in dem Vorratsbehälter befindliche Streusalz an das rückwärtige Ende des Fahrzeugs transportiert, von wo aus es auf der Straße verteilt wird. Das Streufahrzeug umfasst eine Reinigungseinrichtung mit einer an einen Hydranten anschließbaren, entlang der Außenseite des Vorratsbehälters verlaufenden Rohrleitung, welche zur Reinigung des Förderbandes nach getaner Streuarbeit einerseits in das Innere des Vorratsbehälters, andererseits an das auslassseitige Ende des Förderbandes mündet, so dass an der Rohrleitung angeordnete Düsen das Förderband zu reinigen vermögen.

Die DE 10 2010 055 665 A1 beschreibt eine Dosiereinrichtung in Form einer Nockenradschleuse für Dünger oder Saatgut sowie eine hiermit ausgestattete Verteilmaschine, insbesondere in Form einer Drillmaschine. Um das Dosiergehäuse der Dosiereinrichtung, welche das Nockenrad aufnimmt, zu reinigen und dabei zu verhindern, dass fehlgeleitetes Saatgut oder Verschmutzungen bei rotierendem Nockenrad aus dem Dosiergehäuse ausgetragen und dosiert werden, ist letzteres mit einer in dessen Innenraum mündenden Reinigungsöffnung versehen, wobei sich an die Reinigungsöffnung eine Druckluftleitung anschließt, um das Dosiergehäuse bedarfsweise mit Luft spülen zu können.

Der Erfindung liegt daher die Aufgabe zugrunde, eine Verteilmaschine der eingangs genannten Art auf einfache und kostengünstige Weise dahingehend weiterzubilden, dass unter zumindest weitestgehender Vermeidung der vorgenannten Nachteile die Betriebssicherheit erhöht wird.

Erfindungsgemäß wird diese Aufgabe bei einer Verteilmaschine der eingangs genannten Art dadurch gelöst, dass die Verteilmaschine eine Reinigungseinrichtung aufweist, welche wenigstens eine unterhalb des Behälters angeordnete Reinigungsfluidleitung umfasst, welche mit Düsen ausgestattet ist, die in Richtung wenigstens einer Komponente der Verteilmaschine aus der Gruppe
- des Dosierorgans, wobei sich wenigstens eine erste Reinigungsfluidleitung im Wesentlichen ring- oder ringsegmentförmig um das Dosierorgan herum erstreckt,
- des Stellorgans des Dosierorgans,
- des Verteilorgans und
- eines Stellgliedes einer Einrichtung zur Verstellung des Aufgabepunktes des pulver- und/oder partikelförmigem Gutes auf das Verteilorgan
ausgerichtet sind.

Die erfindungsgemäße Ausgestaltung macht es möglich, zumindest einige, vorzugsweise sämtliche Funktionsteile der Verteilmaschine auch während des Verteilens des pulver- und/oder partikelförmigen Gutes, wie insbesondere bei der Feldarbeit oder beim Winterdienst, von anhaftenden oder auch nur lose abgeschiedenen Boden-, Schmutz- und/oder Streugutpartikel zu befreien, wodurch eine hohe Betriebssicherheit dahingehend gewährleistet ist, als eine durch die Partikel bedingte mechanische Beeinträchtigung der Funktionsteile verhindert wird. Darüber hinaus wird nicht nur die Betriebssicherheit erhöht, sondern dient die erfindungsgemäße Ausgestaltung auch dem Umweltschutz, da beispielsweise (teilweise) blockierte Dosier- oder Stellorgane bei einer landwirtschaftlichen Verteilmaschine zu einer Überdüngung aufgrund zu hoher Massenströme des Düngers führen können, während z.B. (teilweise) blockierte Verteilorgane zu einer Veränderung der Arbeitsbreite führen können, was wiederum einerseits in einer lokalen Überdüngung resultieren kann, während in anderen lokalen Bereichen zu wenig oder kein Dünger ausgebracht wird. Im Falle einer Winterdienststreumaschine gilt entsprechendes hinsichtlich einer zu hohen Ausbringmenge an Streusalz, welches bekanntlich wenig umweltfreundlich ist und Pflanzen schädigen kann. Schließlich gestaltet sich der ohnehin übliche Reinigungsaufwand nach der Streuarbeit erheblich weniger schwierig, da die in aller Regel schwer zugänglichen, unterhalb des Behälters angeordneten Funktionsteile nicht mehr aufwändig von Hand gereinigt werden müssen.

Wie gerade angedeutet, sieht eine vorteilhafte Ausgestaltung der Erfindung aus den obigen Gründen vor, dass die wenigstens eine Reinigungsfluidleitung mit in Richtung des Dosierorgans, dessen Stellorgans und des Verteilorgans sowie gegebenenfalls - soweit vorhanden - des Stellgliedes der Einrichtung zur Verstellung des Aufgabepunktes des pulver- und/oder partikelförmigen Gutes auf das Verteilorgan ausgerichteten Düsen ausgestattet ist, so dass praktisch alle wichtigen Funktionsteile einer gattungsgemäßen Verteilmaschine in automatisierter Weise mittels der Reinigungseinrichtung vor Partikelablagerungen und -anbackungen befreit werden können.

In konstruktiver Hinsicht hat es sich als günstig erwiesen, wenn die wenigstens eine Reinigungsfluidleitung an einem unterhalb des Behälters angeordneten Grundrahmen der Verteilmaschine festgelegt ist.

Um für eine einwandfreie Reinigungswirkung der Dosier- und Verteilorgane der Verteilmaschine zu sorgen, kann es ferner günstig sein, wenn sich wenigstens eine erste Reinigungsfluidleitung im Wesentlichen ring- oder ringsegmentförmig um
- das Dosierorgan und/oder
- das Verteilorgan
herum erstreckt, wobei die Düsen der ersten Reinigungsfluidleitung in Richtung
- des Dosierorgans und/oder
- des Verteilorgans
ausgerichtet sind. Die erste Reinigungsfluidleitung erstreckt sich folglich vorzugsweise um die Dosier- und Verteilorgane herum, so dass diese allseitig von pulver- und partikelförmigen Abscheidungen befreit werden können.

Um für eine einwandfreie Reinigungswirkung der Stellorgane der Dosierorgane der Verteilmaschine zu sorgen, kann es überdies günstig sein, wenn sich wenigstens eine zweite Reinigungsfluidleitung entlang dem Stellorgan erstreckt und mit in Richtung des Stellorgans ausgerichteten Düsen ausgestattet ist. Auch insoweit kann sichergestellt werden, dass die z.B. häufig von Stellzylindern gebildeten Stellorgane allseitig von Abscheidungen und Anbackungen befreit werden können, wobei es je nach Geometrie des jeweiligen Stellorgans selbstverständlich auch möglich ist, an wenigstens zwei, insbesondere entgegengesetzten, Seiten desselben eine sich entlang des Stellorgans angeordnete zweite Reinigungsfluidleitung vorzusehen, wobei es sich stattdessen z.B. aber auch hier anbieten kann, eine sich um das Stellorgan herum erstreckende Reinigungsfluidleitung vorzusehen.

Sofern die Verteilmaschine mit einer mittels Stellgliedern, insbesondere gleichfalls in Form von Stellzylindern, betätigten Einrichtung zur Verstellung des Aufgabepunktes des pulver- und/oder partikelförmigen Gutes auf das Verteilorgan ausgestattet ist, kann aus den genannten Gründen ferner vorzugsweise vorgesehen sein, dass sich wenigstens eine dritte Reinigungsfluidleitung entlang dem Stellglied der Einrichtung zur Verstellung des Aufgabepunktes des pulver- und/oder partikelförmigem Gutes auf das Verteilorgan erstreckt und mit in Richtung des Stellgliedes ausgerichteten Düsen ausgestattet ist.

Gemäß einer Weiterbildung der Erfindung kann vorgesehen sein, dass die Reinigungseinrichtung ferner wenigstens eine weitere, unterhalb des Behälters angeordnete Reinigungsfluidleitung umfasst, welche mit in Richtung der Unterseite des Behälters und/oder eines Grundrahmens der Verteilmaschine, welcher insbesondere sowohl die Funktionsteile als auch den Behälter selbst trägt, ausgerichteten Düsen ausgestattet ist. Auf diese Weise ist es möglich, über die Reinigungsfunktion der Funktionsteile hinaus für eine praktisch komplette automatisierte Reinigung des schwer zugänglichen Raumes unterhalb des Behälters zu sorgen. Die wenigstens eine weitere Reinigungsfluidleitung kann sich beispielsweise im Wesentlichen ring- oder ringsegmentförmig entlang eines unterhalb des Behälters angeordneten Grundrahmens der Verteilmaschine bzw. entlang eines oder mehrerer Rahmenelemente desselben erstrecken.

Gemäß einer alternativen oder kumulativen Weiterbildung der Erfindung kann darüber hinaus vorgesehen sein, dass die Reinigungseinrichtung ferner wenigstens eine weitere, sich quer über die - in Fahrtrichtung der Verteilmaschine betrachtet -"Rückseite des Behälters erstreckende Reinigungsfluidleitung umfasst, welche mit in Richtung der Rückseite des Behälters ausgerichteten Düsen ausgestattet ist. Zwar kommt es aufgrund von am Behälter selbst abgeschiedenen Partikel in aller Regel nicht zu Funktionsstörungen der Verteilmaschine und ist die Behälterrückseite zur manuellen Reinigung leicht zugänglich, doch kann auch insoweit eine automatisierte Reinigung erwünscht sein, da gerade hier von den Rädern der Zugmaschine oder - sofern es sich um eine geschleppte Verteilmaschine handelt - der Verteilmaschine selbst sowie insbesondere auch von den Verteilorganen erhebliche Mengen an Boden-, Schmutz und Streugutpartikel abgeschieden werden, welche insbesondere im Falle einer landwirtschaftlichen Verteilmaschine zu einer starken Verschmutzung von Straßen mit einem dadurch bedingten Sicherheitsrisiko aufgrund Schleudergefahr führen können, wenn sie während der Fahrt von dem Feld zurück auf den landwirtschaftlichen Hof abplatzen und die Straße verunreinigen.

Die sich quer über die Rückseite des Behälters erstreckende Reinigungsfluidleitung kann z.B. ein Kopplungsstück aufweisen, mittels welchem sie lösbar mit einer unterhalb des Behälters angeordneten Zuführleitung fluidisch kontaktiert ist, so dass sie von der Zuführleitung in einfacher Weise getrennt werden kann, wenn der Behälter - beispielsweise zu Wartungszwecken der darunter angeordneten Funktionsteile - abgenommen werden soll. Eine solche Zuführleitung der sich quer über die Rückseite des Behälters erstreckenden Reinigungsfluidleitung kann insbesondere von der sich im Wesentlichen ring- oder ringsegmentförmig entlang einem unterhalb des Behälters angeordneten Grundrahmen der Verteilmaschine erstreckenden, weiteren Reinigungsfluidleitung gebildet sein, welche folglich auch zur Fluidversorgung der sich quer über die Rückseite des Behälters erstreckenden Reinigungsfluidleitung dient. Mit "quer über die Rückseite des Behälters" ist im Übrigen gemeint, dass die Reinigungsfluidleitung oder auch die mehreren Reinigungsfluidleitungen entlang der Behälterrückseite geführt sind, z.B. von oben nach unten, S-förmig oder in beliebiger anderer Anordnung.

Gemäß einer zusätzlichen Weiterbildung der Erfindung kann überdies vorgesehen sein, dass die Reinigungseinrichtung ferner wenigstens eine weitere, sich ring- oder ringsegmentförmig im Bereich eines oberen Umfangsrandes des Behälters erstreckende Reinigungsfluidleitung aufweist, welche mit in Richtung der Innenwände des Behälters ausgerichteten Düsen ausgestattet ist, um den Innenraum des Behälters selbst nach seiner Entleerung in automatisierter Weise von Dünger- oder Saatgutpartikeln bzw. von Splitt- und/oder Streusalzpartikeln zu reinigen. In diesem Zusammenhang sei darauf hingewiesen, dass insbesondere gattungsgemäße Verteilmaschinen für den landwirtschaftlichen Einsatz üblicherweise Behälter mit einem Fassungsvermögen von mehreren 1000 l aufweisen, wobei es eine Behälterreinigung bislang erfordert hat, z.B. über eine an dem Behälter angelenkte Leiter in den Behälter hineinzusteigen, was durchaus eine nicht unerhebliche Unfallgefahr darstellen kann. Insoweit sei auf die DE 20 2008 013 948 U1 verwiesen.

Die wenigstens eine weitere, sich ring- oder ringsegmentförmig entlang einem oberen Umfangsrand des Behälters erstreckende Reinigungsfluidleitung kann beispielsweise über die wenigstens eine weitere, sich quer über die Rückseite des Behälters erstreckende Reinigungsfluidleitung fluidisch kontaktiert sein, so letztere wiederum zur Fluidversorgung der zur Reinigung des Behälterinneren dienenden Reinigungsfluidleitung dient.

Die wenigstens eine weitere, sich ring- oder ringsegmentförmig im Bereich eines oberen Umfangsrandes des Behälters erstreckende Reinigungsfluidleitung kann hinsichtlich einer wirksamen Reinigungsfunktion des Behälterinneren z.B. an der oberen Stirnseite oder an der Innenseite des Behälters festgelegt oder in den Behälter integriert sein, wobei der Behälter im letztgenannten Fall also z.B. einen sich um seinen Umfang erstreckenden Ringraum aufweisen kann, aus welchem das Reinigungsfluid über als Düsen dienende Bohrungen, welche den Ringraum mit der Innenfläche des Behälters verbinden, in das Behälterinnere eingebracht werden kann.

Alternativ oder zusätzlich ist es beispielsweise auch denkbar, dass die wenigstens eine weitere, sich ring- oder ringsegmentförmig im Bereich eines oberen Umfangsrandes des Behälters erstreckende Reinigungsfluidleitung an einem in den Behälter eingelegten Schutzgitter angeordnet ist, wie es insbesondere bei Behältern gattungsgemäßer Verteilmaschinen für den landwirtschaftlichen Einsatz üblicherweise ohnehin vorgesehen ist, um zu verhindern, dass Fremdgegenstände, wie Steine, Äste oder dergleichen in den Behälter gelangen und dessen Auslauföffnung verstopfen können.

Auch hier kann es im Hinblick auf eine einwandfreie Reinigungsfunktion des Behälterinneren zweckmäßig sein, wenn die wenigstens eine weitere, sich ring- oder ringsegmentförmig im Bereich eines oberen Umfangsrandes des Behälters erstreckende Reinigungsfluidleitung im Umfangsbereich des Schutzgitters festgelegt ist.

Darüber hinaus kann es im Falle einer an dem Schutzgitter angeordneten Reinigungsfluidleitung von Vorteil sein, wenn die wenigstens eine weitere, im Umfangsbereich des Schutzgitters festgelegte Reinigungsfluidleitung ein Kopplungsstück aufweist, mittels welcher sie lösbar mit der wenigstens einen, sich quer über die Rückseite des Behälters erstreckende Reinigungsfluidleitung fluidisch kontaktiert ist, so dass erstere in einfacher und bequemer Weise von der zur Fluidversorgung dienenden, sich entlang der Behälterrückseite erstreckenden Reinigungsfluidleitung getrennt werden kann, wenn das Schutzgitter dem Behälter entnommen werden soll, um den Behälter z.B. (wieder) zu befüllen.

Überdies eröffnet eine solche weitere, im Umfangsbereich des Schutzgitters festgelegte Reinigungsfluidleitung die Möglichkeit, eine sich bis zu einer Stelle oberhalb der Auslauföffnung des Behälters erstreckende Abzweigleitung mit wenigstens einer, in Richtung der Auslauföffnung nach unten gerichteten Düse vorzusehen, um die Auslauföffnung bzw. das dieser zugeordnete Dosierorgan direkt von oben bzw. vom Behälter her reinigen zu können. Entsprechendes gilt hinsichtlich der Reinigung eines Rührwerks, mit welchem die Auslauföffnungen gattungsgemäßer Verteilmaschinen innenseitig des Behälters häufig versehen sind, um Verklumpungen des pulver- und/oder partikelförmigen Streugutes zu lösen und dessen Rieselfähigkeit sicherzustellen, bevor es durch die Auslauföffnung an die Dosierorgane gelangt.

Bei dem von der erfindungsgemäßen Reinigungseinrichtung verwendeten Reinigungsfluid kann es sich grundsätzlich um beliebige bekannte, zur Reinigung von Oberflächen von pulver- oder partikelförmigen Stoffen geeignete Fluide handeln. So ist es beispielsweise möglich, dass das Reinigungsfluid Druckgas, insbesondere Druckluft, oder eine insbesondere gleichfalls mit einem Druck beaufschlagte Flüssigkeit, insbesondere Wasser, ist, wobei der Flüssigkeit bzw. dem Wasser selbstverständlich geeignete Additive, wie Reinigungs-, Frostschutzmittel und dergleichen, zugesetzt sein können, welche jedoch ökologisch verträglich und insbesondere die auf dem Feld angebauten oder die am Straßenrand befindlichen Pflanzen nicht schädigen sollten.

Die Reinigungseinrichtung weist in vorteilhafter Ausgestaltung ein Druckfluidreservoir aufweist, in welches die Reinigungsfluidleitung(en) münden. Das Druckfluidreservoir kann hierbei zweckmäßig an einem Rahmen der Verteilmaschine, z.B. unterhalb deren Behälter, angeordnet sein.

Die Reinigungsfluidleitung(en) kann/können zweckmäßig unter Zwischenschaltung von Steuerventilen an das Druckfluidreservoir angeschlossen sein, wobei die Steuerventile der Reinigungseinrichtung vorzugsweise mit einer Steuereinrichtung der Verteilmaschine wirkverbunden sind, welche insbesondere ein mobiles oder stationär im Führerhaus einer Zugmaschine, wie eines Traktors oder Straßenfahrzeugs, angeordnetes, sei es drahtlos oder sei es über Kabel mit der Steuereinrichtung verbundenes Steuermodul umfasst, um die Reinigungseinrichtung bedarfsweise während oder nach der Streuarbeit bedienen zu können, so dass die pulver- und/oder partikelförmigen Rückstände vor Ort entfernt werden können und nicht z.B. in dem landwirtschaftlichen Betrieb oder in dem Bauhof entsorgt werden müssen. Mittels des Steuermoduls des Steuereinrichtung, welches - wie gesagt - mobil oder stationär an der Verteilmaschine selbst oder vorzugsweise in einer Zugmaschine, wie einem Traktor oder einem Straßenfahrzeug, angeordnet sein kann, kann der Benutzer folglich die Steuerventile bedarfsweise öffnen und schließen, wenn er alle oder nur einige Komponenten der Verteilmaschine reinigen möchte.

Das Druckfluidreservoir kann z.B. einen elektrischen Druckerzeuger, wie einen Kompressor, eine Kolben-/Zylindereinheit oder dergleichen, aufweisen, welcher insbesondere an die elektrische Stromversorgung einer Zugmaschine, wie eines Traktors oder eines Straßenfahrzeugs, anschließbar sein kann, um von dieser mit Strom versorgt zu werden.

Stattdessen kann das Druckfluidreservoir beispielsweise auch einen hydraulischen Druckerzeuger, wie eine Kolben-/Zylindereinheit oder dergleichen, aufweisen, welcher insbesondere an das Hydrauliksystem einer Zugmaschine, wie eines Traktors oder eines Straßenfahrzeugs, anschließbar sein kann, um von diesem mit Druck beaufschlagt zu werden.

Überdies ist es möglich, dass das Druckfluidreservoir an den Anschluss einer pneumatischen Luftdruckbremse einer Zugmaschine, wie eines Traktors oder Straßenfahrzeugs, anschließbar ist, so dass es über das pneumatische Bremssystem der Zugmaschine mit Druck beaufschlagt werden kann.

Die Verteilmaschine kann einen eine oder - insbesondere im Falle einer landwirtschaftlichen Verteilmaschine - vorzugsweise wenigstens zwei, insbesondere genau zwei, Kammern aufweisenden Behälter mit je einer, am Boden einer jeden Kammer des Behälters angeordneten Auslauföffnung mit je einem Dosierorgan umfassen, wobei jedes Dosierorgan mittels je eines Stellorgans auf- und zusteuerbar ist, wobei die Verteilmaschine ferner je ein unterhalb eines jeden Dosierorgans angeordnetes Verteilorgan zum Verteilen des Düngers und/oder Saatgutes auf dem Boden aufweist. Wie eingangs erwähnt, kann die Verteilmaschine ferner eine beiden Verteilorganen gemeinsame oder je eine, einem jeden Verteilorgan zugeordnete Einrichtung zur Verstellung des Aufgabepunktes des Streugutes auf das Verteilorgan aufweisen, wie sie z.B. als solche der DE 10 2007 053 550 A1 zu entnehmen ist.

Das bzw. die Verteilorgan(e) der Verteilmaschine können grundsätzlich von beliebiger bekannter Ausgestaltung sein, wobei sie vorzugsweise mit Wurfschaufeln versehene Verteilerscheiben umfassen können, wie es bei einem Scheibenstreuer der Fall ist. Entsprechendes gilt für das oder die Dosierorgan(e) sowie für deren Stellorgan(e), wobei erstere vorzugsweise einen Dosierschieber aufweisen können, während letztere bevorzugt eine Kolben-/Zylindereinheit aufweisen können. Die Stellglieder der optional vorgesehenen Einrichtung zur Verstellung des Aufgabepunktes des pulver- und/oder partikelförmigen Gutes auf das Verteilorgan können ihrerseits, insbesondere elektrische, Stellzylinder umfassen.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische perspektivische Ansicht einer Ausführungsform einer landwirtschaftlichen Verteilmaschine in Form eines als Zweischeibenstreuer ausgebildete Anbau-Düngerstreuers, wobei der Behälter zur besseren Veranschaulichung nicht dargestellt ist;
- Fig. 2: eine schematische Draufsicht auf die Verteilmaschine gemäß Fig. 1 von oben, wobei der Behälter zur besseren Veranschaulichung transparent in Strichlinierung dargestellt ist; und
- Fig. 3: eine schematische perspektivische Ansicht der Verteilmaschine gemäß Fig. 1 und 2 schräg von oben auf deren Behälter.

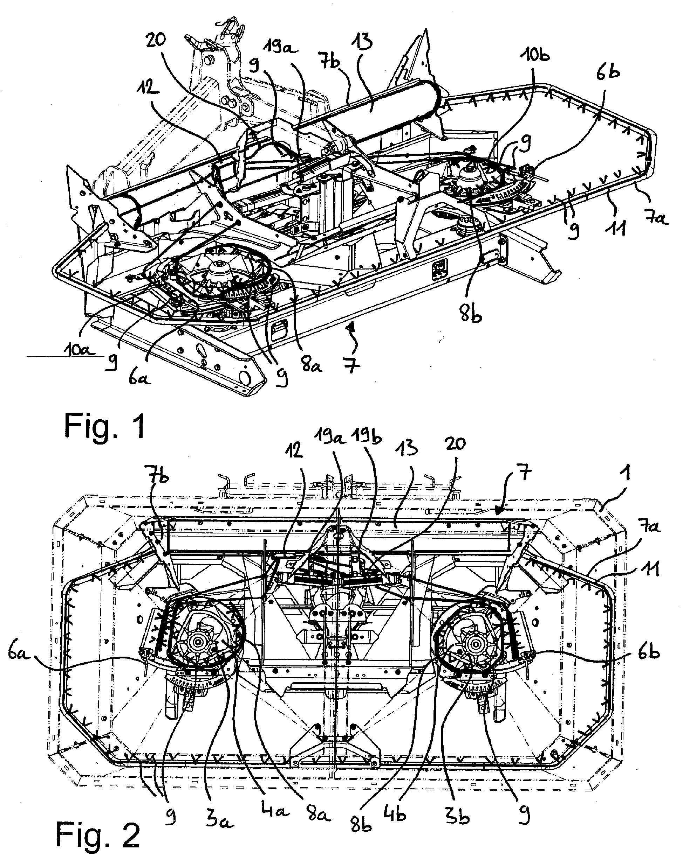

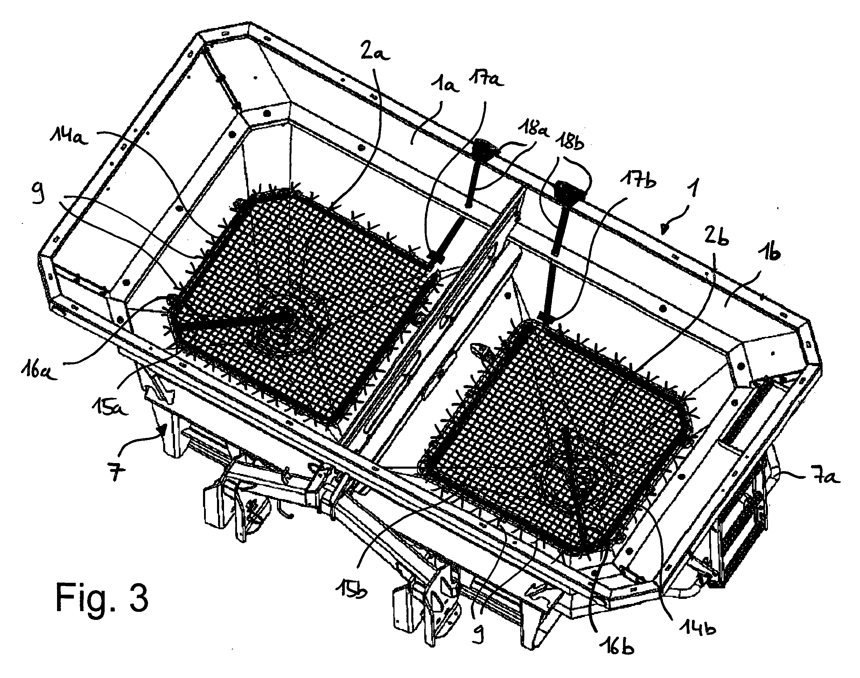

In Fig. 1 bis 3 ist ein Ausführungsbeispiel einer erfindungsgemäßen Verteilmaschine in Form einer landwirtschaftlichen Streumaschine anhand eines Anbau-Düngerstreuers wiedergegeben, welcher im vorliegenden Fall als Zweischeibenstreuer ausgebildet ist. Wie insbesondere aus Fig. 3 ersichtlich, weist die Verteilmaschine einen zwei Kammern 1a, 1b aufweisenden Behälter 1 auf, welcher als Vorratsbehälter für das auszubringende Streugut dient. Am Boden einer jeden, sich im Wesentlichen trichterförmig nach unten verjüngenden Behälterkammer 1a, 1b befindet sich je eine Auslauföffnung 2a, 2b, welche jeweils mit einem Rührwerk 3a, 3b (siehe Fig. 2) ausgestattet ist, welches von unten in die jeweilige Behälterkammer 1a, 1b hineinragt. Jeder Auslauföffnung 2a, 2b ist ferner ein Dosierorgan 4a, 4b (siehe ebenfalls Fig. 2) zugeordnet, welches im vorliegenden Fall von je einem Dosierschieber gebildet ist, welcher die jeweilige Auslauföffnung entsprechend des gewünschten Massenstromes an Streugut teilweise oder auch gänzlich verschließt. Die Dosierorgane 4a, 4b sind von individuell bzw. unabhängig voneinander steuerbaren Stellorganen 6a, 6b (siehe Fig. 1 und 2) betätigt, welche bei dem gezeigten Ausführungsbeispiel Stellzylinder mit Kolben-/Zylindereinheiten umfassen. Koaxial zu den vertikalen Drehachsen der Rührwerke 3a, 3b ist je ein Verteilorgan in Form einer (nicht zeichnerisch dargestellten) gesteuert rotationsangetriebenen Verteilerscheibe drehbar gelagert, welche üblicherweise mit Wurfschaufeln ausgestattet ist, um das aus der jeweiligen Behälterkammer 1a, 1b über die Dosierorgane 4a, 4b auf die Verteilerscheiben auftreffende Streugut radial fort zu schleudern und auf dem Boden zu verteilen. Darüber hinaus weist die Verteilmaschine eine Einrichtung zur Verstellung des Aufgabepunktes des Streugutes auf die Verteilorgane auf, welche ein Hebelgestänge zum Verlagern der Dosieröffnungen mit ihren Dosierschiebern umfasst und von welcher lediglich die beispielsweise von Elektrozylindern gebildeten Stellglieder mit den Bezugszeichen 19a und 19b versehen sind. Die genannten Funktionsteile, nämlich die Rührwerke 3a, 3b, die Dosierorgane, 4a, 4b, deren Stellorgane 6a, 6b, die Verteilorgane sowie die Einrichtung zur Verstellung des Aufgabepunktes einschließlich deren Stellglieder 19a, 19b, sind an einem den Behälter 1 tragenden Rahmen 7 der Verteilmaschine unterhalb des Behälters 1 angeordnet.

Wie den Fig. 1 und 2 zu entnehmen ist, weist die Verteilmaschine eine Reinigungseinrichtung auf, welche zwei erste Reinigungsfluidleitungen 8a, 8b umfasst, die sich ringsegmentförmig um ein jeweiliges Dosierorgan 4a, 4b sowie das jeweilige, unterhalb desselben befindliche Verteilorgan (nicht gezeigt) erstrecken und mit einer Mehrzahl an Düsen 9 ausgestattet ist, welche nur schematisch in Form eines die Düsenstrahlen andeutenden "V" angedeutet sind und in Richtung der jeweiligen Dosier- 4a, 4b und Verteilorgane ausgerichtet sind, um diese von anhaftenden und abgelagerten Boden- und Streugutpartikeln zu befreien. Die Reinigungseinrichtung umfasst überdies zwei zweite Reinigungsfluidleitungen 10a, 10b, welche sich entlang einem jeweiligen Stellorgan 6a, 6b erstrecken und ihrerseits mit hierauf gerichteten Düsen 9 ausgestattet sind. Eine dritte Reinigungsfluidleitung 20 der Reinigungseinrichtung erstreckt sich entlang einem jeweiligen Stellglied 19a, 19b der Einrichtung zur Verstellung des Aufgabepunktes und weist in Richtung der Stellglieder 19a, 19b gerichtete Düsen 9 auf.

Darüber hinaus umfasst die Reinigungseinrichtung eine weitere, unterhalb des Behälters 1 verlaufende Reinigungsfluidleitung 11, welche sowohl mit nach oben in Richtung der Unterseite des Behälters 1 als auch nach innen in Richtung des Rahmens 7 ausgerichteten Düsen 9 versehen ist und sich ringsegmentförmig um ein umfängliches Rahmenelement 7a des Rahmens 7 erstreckt. Die erste 8a, 8b, zweite 10a, 10b und dritte 20 sowie die weitere Reinigungsfluidleitung 11 sind an dem Grundrahmen 7 der Verteilmaschine festgelegt und können sowohl starre als auch nachgiebige bzw. elastische Leitungsstücke aufweisen, wobei sie in einen mit Steuerventilen ausgestatteten Ventilblock 12 münden, um sie bedarfsweise mit dem Reinigungsfluid beaufschlagen zu können. Der Ventilblock 12 sitzt beim vorliegenden Ausführungsbeispiel unmittelbar auf einem dem Reinigungsfluid als Vorratsbehälter dienenden Druckfluidreservoirs 13, welches gleichfalls unterhalb des Behälters 1 angeordnet sein kann und im vorliegenden Fall an einer Traverse 7b des Rahmens 7 festgelegt ist. Dem Druckfluidreservoir kann insbesondere ein elektrischer oder hydraulischer Druckerzeuger, wie ein Kompressor oder eine Kolben-/Zylindereinheit (nicht gezeigt), zugeordnet sein, welche vorzugsweise von der elektrischen Stromversorgung oder dem Hydrauliksystem einer Zugmaschine, wie eines Traktors, welche(r) die Verteilmaschine aufzunehmen vermag, versorgt ist oder auch an einen Anschluss deren pneumatischen Luftdruckbremssystems angeschlossen sein kann. Bei dem Druckfluid selbst kann es sich um gasförmige oder flüssige Medien handeln, wie beispielsweise Wasser oder Druckluft.

Wie aus Fig. 3 ersichtlich, umfasst die Reinigungseinrichtung zwei weitere, sich jeweils ringsegmentförmig im Bereich eines oberen Umfangsrandes einer jeden Behälterkammer 1a, 1b des Behälters 1 erstreckende Reinigungsfluidleitungen 14a, 14b, welche ihrerseits mit einer Mehrzahl an in Richtung der Innenwand des Behälters 1 gerichteten Düsen 9 ausgestattet sind und zur Reinigung des Behälterinneren dienen. Während die Reinigungsfluidleitungen 14a, 14b grundsätzlich auch an einem oberen Umfangsbereich des Behälters 1 selbst angeordnet sein können, erstrecken sie beim vorliegenden Ausführungsbeispiel stattdessen um den Umfangsrand eines jeweiligen Schutzgitters 15a, 15b, welches in eine jeweilige Behälterkammer 1a, 1b eingelegt ist. Die Reinigungsfluidleitungen 14a, 14b umfassen ferner je eine sich hiervon bis zu einem etwa zentralen, oberhalb einer jeweiligen Auslauföffnung 2a, 2b der Behälterkammern 1a, 1b angeordneten Punkt eines jeweiligen Schutzgitters 15a, 15b erstreckende Abzweigleitung 16a, 16b, welche mit zumindest einer oder mehreren nach unten gerichteten Düsen ausgestattet ist, um insbesondere die Rührwerke 3a, 3b (vgl. Fig. 2) von Streugutpartikeln reinigen zu können. Die an den Schutzgittern 15a, 15b befestigten Reinigungsfluidleitungen 14a, 14b können im Übrigen über geeignete Kopplungsstücke 17a, 17b an Zuführleitungen 18a, 18b, welche an dem Behälter 1 selbst befestigt sind, lösbar befestigt sein, um für eine einfache und schnelle Abnahme der Schutzgitter 15a, 15b unter Trennung der Reinigungsfluidleitungen 14a, 14b von ihren Zu- bzw. Versorgungsleitungen 18a, 18b zu sorgen.

Die zur fluidischen Kontaktierung der Reinigungsfluidleitungen 14a, 14b dienenden Zu- bzw. Versorgungsleitungen 18a, 18b können sich in Form weiterer Reinigungsfluidleitungen beispielsweise entlang der (in Fig. 3 nicht erkennbaren) Rückseite des Behälters 1 fortsetzen und quer über diese verlaufen und dort ebenfalls mit in Richtung der Behälterrückwand ausgerichteten Düsen ausgestattet sein, so dass auch die Rückwand des Behälters 1 mittels der Reinigungseinrichtung von Boden- und Streugutpartikeln befreit werden kann. Die quer über die Rückseite des Behälters 1, z.B. etwa "S"-förmig verlaufenden Reinigungsfluidleitungen 18a, 18b münden gleichfalls in den Ventilblock gemäß Fig. 1 und 2 (nicht gezeigt) und können mittels geeigneter Kopplungsstücke in zumindest zwei Stränge unterteilt sein, um die jeweiligen Leitungen im Falle eines Abnehmens des Behälters 1 trennen zu können. Indes muss die fluidische Versorgung der im oberen Umfangsbereich der Behälterkammern 1a, 1b angeordneten Reinigungsfluidleitungen 14a, 14b bzw. deren Abzweigleitungen 16a, 16b nicht notwendigerweise über die sich entlang der Rückwand des Behälters 1 erstreckenden Reinigungsfluidleitungen 18a, 18b erfolgen, sondern können diese auch separat über den Ventilblock 12 mit dem Fluidreservoir 12 fluidisch kontaktiert sein.

## Patentansprüche

1. Verteilmaschine, insbesondere landwirtschaftliche Streumaschine oder Winterdienststreumaschine, mit wenigstens einem Behälter (1) zur Aufnahme von pulver- und/oder partikelförmigem Gut, wenigstens einer am Boden des Behälters (1) angeordneten Auslauföffnung (2a, 2b) mit einem Dosierorgan (4a, 4b), welches mittels eines Stellorgans (6a, 6b) auf- und zusteuerbar ist, sowie einem unterhalb des Dosierorgans (4a, 4b) angeordneten Verteilorgan zum Verteilen des pulver- und/oder partikelförmigen Gutes auf dem Boden, **dadurch gekennzeichnet, dass** die Verteilmaschine eine Reinigungseinrichtung aufweist, welche wenigstens eine unterhalb des Behälters (1) angeordnete Reinigungsfluidleitung (8a, 8b; 10a, 10b; 20) umfasst, welche mit Düsen (9) ausgestattet ist, die in Richtung wenigstens einer Komponente der Verteilmaschine aus der Gruppe
- des Dosierorgans (4a, 4b), wobei sich wenigstens eine erste Reinigungsfluidleitung (8a, 8b) im Wesentlichen ring- oder ringsegmentförmig um das Dosierorgan (4a, 4b) herum erstreckt,
- des Stellorgans (6a, 6b) des Dosierorgans (4a, 4b),
- des Verteilorgans und
- eines Stellgliedes (19a, 19b) einer Einrichtung zur Verstellung des Aufgabepunktes des pulver- und/oder partikelförmigem Gutes auf das Verteilorgan
ausgerichtet sind.

2. Verteilmaschine nach Anspruch 1, **dadurch gekennzeichnet, dass** die wenigstens eine Reinigungsfluidleitung (8a, 8b; 10a, 10b; 20) an einem unterhalb des Behälters (1) angeordneten Grundrahmen (7) der Verteilmaschine festgelegt ist.

3. Verteilmaschine nach Anspruch 1 oder 2, **dadurch gekennzeichnet, dass** sich wenigstens eine erste Reinigungsfluidleitung (8a, 8b) im Wesentlichen ring- oder ringsegmentförmig um
- das Dosierorgan (4a, 4b) und/oder
- das Verteilorgan
herum erstreckt, wobei die Düsen (9) der ersten Reinigungsfluidleitung (8a, 8b) in Richtung
- des Dosierorgans (4a, 4b) und/oder
- des Verteilorgans
ausgerichtet sind.

4. Verteilmaschine nach einem der Ansprüche 1 bis 3, **dadurch gekennzeichnet, dass** sich wenigstens eine zweite Reinigungsfluidleitung (10a, 10b) entlang dem Stellorgan (6a, 6b) des Dosierorgans (4a, 4b) erstreckt und mit in Richtung des Stellorgans (6a, 6b) ausgerichteten Düsen (9) ausgestattet ist.

5. Verteilmaschine nach einem der Ansprüche 1 bis 4, **dadurch gekennzeichnet, dass** sich wenigstens eine dritte Reinigungsfluidleitung (20) entlang dem Stellglied (19a, 19b) der Einrichtung zur Verstellung des Aufgabepunktes des pulver- und/oder partikelförmigem Gutes auf das Verteilorgan erstreckt und mit in Richtung des Stellgliedes (19a, 19b) ausgerichteten Düsen (9) ausgestattet ist.

6. Verteilmaschine nach einem der Ansprüche 1 bis 5, **dadurch gekennzeichnet, dass** die Reinigungseinrichtung ferner wenigstens eine weitere, unterhalb des Behälters (1) angeordnete Reinigungsfluidleitung (11) umfasst, welche mit in Richtung der Unterseite des Behälters (1) und/oder in Richtung eines Grundrahmens (7) der Verteilmaschine ausgerichteten Düsen (9) ausgestattet ist, wobei sich die weitere Reinigungsfluidleitung (11) insbesondere im Wesentlichen ring- oder ringsegmentförmig entlang einem unterhalb des Behälters (1) angeordneten Rahmenelement (7a) der Verteilmaschine erstreckt.

7. Verteilmaschine nach einem der Ansprüche 1 bis 6, **dadurch gekennzeichnet, dass** die Reinigungseinrichtung ferner wenigstens eine weitere, sich quer über die - in Fahrtrichtung der Verteilmaschine betrachtet - Rückseite des Behälters (1) erstreckende Reinigungsfluidleitung (18a, 18b) umfasst, welche mit in Richtung der Rückseite des Behälters (1) ausgerichteten Düsen ausgestattet ist, wobei die sich quer über die Rückseite des Behälters (1) erstreckende Reinigungsfluidleitung (18a, 18b) insbesondere ein Kopplungsstück aufweist, mittels welcher sie lösbar mit einer unterhalb des Behälters (1) angeordneten Zuführleitung fluidisch kontaktiert ist.

8. Verteilmaschine nach Anspruch 6 und 7, **dadurch gekennzeichnet, dass** die Zuführleitung der sich quer über die Rückseite des Behälters (1) erstreckenden Reinigungsfluidleitung (18a, 18b) von der sich im Wesentlichen ring- oder ringsegmentförmig entlang einem unterhalb des Behälters (1) angeordneten Rahmenelement (7a) der Verteilmaschine erstreckenden, weiteren Reinigungsfluidleitung (11) gebildet ist.

9. Verteilmaschine nach einem der Ansprüche 1 bis 8, **dadurch gekennzeichnet, dass** die Reinigungseinrichtung ferner wenigstens eine weitere, sich ring- oder ringsegmentförmig im Bereich eines oberen Umfangsrandes des Behälters (1) erstreckende Reinigungsfluidleitung (14a, 14b) aufweist, welche mit in Richtung der Innenwände des Behälters (1) ausgerichteten Düsen (9) ausgestattet ist, wobei die wenigstens eine weitere, sich ring- oder ringsegmentförmig entlang einem oberen Umfangsrand des Behälters erstreckende Reinigungsfluidleitung (14a, 14b) insbesondere über die wenigstens eine weitere, sich quer über die Rückseite des Behälters (1) erstreckende Reinigungsfluidleitung (18a, 18b) fluidisch kontaktiert ist.

10. Verteilmaschine nach Anspruch 9, **dadurch gekennzeichnet, dass** die wenigstens eine weitere, sich ring- oder ringsegmentförmig im Bereich eines oberen Umfangsrandes des Behälters (1) erstreckende Reinigungsfluidleitung (14a, 14b)
- an der oberen Stirnseite oder an der Innenseite des Behälters (1) festgelegt oder in den Behälter (1) integriert ist; und/oder
- an einem in den Behälter (1) eingelegten Schutzgitter (15a, 15b), insbesondere im Umfangsbereich des Schutzgitters (15a, 15b), angeordnet ist.

11. Verteilmaschine nach Anspruch 10, **dadurch gekennzeichnet, dass** die wenigstens eine weitere, im Umfangsbereich des Schutzgitters (15a, 15b) festgelegte Reinigungsfluidleitung (14a, 14b) ein Kopplungsstück (17a, 17b) aufweist, mittels welcher sie lösbar mit der wenigstens einen, sich quer über die Rückseite des Behälters (1) erstreckende Reinigungsfluidleitung (18a, 18b) fluidisch kontaktiert ist.

12. Verteilmaschine nach Anspruch 10 oder 11, **dadurch gekennzeichnet, dass** die wenigstens eine weitere, im Umfangsbereich des Schutzgitters (15a, 15b) festgelegte Reinigungsfluidleitung (14a, 14b) eine sich bis zu einer Stelle oberhalb der Auslauföffnung (2a, 2b) des Behälters (1) erstreckende Abzweigleitung (16a, 16b) mit wenigstens einer, in Richtung der Auslauföffnung (2a, 2b) nach unten gerichteten Düse aufweist.

13. Verteilmaschine nach einem der Ansprüche 1 bis 12, **dadurch gekennzeichnet, dass** das Reinigungsfluid aus der Gruppe der Druckgase, insbesondere Druckluft, und der Flüssigkeiten, insbesondere Wasser, gewählt ist.

14. Verteilmaschine nach einem der Ansprüche 1 bis 13, **dadurch gekennzeichnet, dass** die Reinigungseinrichtung ein Druckfluidreservoir (13) aufweist, in welches die Reinigungsfluidleitung(en) (8a, 8b; 10a, 10b; 11; 18a, 18b) münden, wobei die Reinigungsfluidleitung(en) (8a, 8b; 10a, 10b; 11; 18a, 18b) insbesondere unter Zwischenschaltung von Steuerventilen (12) an das Druckfluidreservoir (13) angeschlossen ist/sind.

15. Verteilmaschine nach Anspruch 14, **dadurch gekennzeichnet, dass** die Steuerventile (12) der Reinigungseinrichtung mit einer Steuereinrichtung der Verteilmaschine wirkverbunden sind, welche insbesondere ein mobiles oder stationär im Führerhaus einer Zugmaschine, wie eines Traktors oder Straßenfahrzeugs, angeordnetes Steuermodul umfasst.

16. Verteilmaschine nach Anspruch 14 oder 15, **dadurch gekennzeichnet, dass** das Druckfluidreservoir (13) wenigstens einen Druckerzeuger aus der Gruppe
- elektrischer Druckerzeuger, welcher insbesondere an die elektrische Stromversorgung einer Zugmaschine, wie eines Traktors oder eines Straßenfahrzeugs, anschließbar ist;
- hydraulischer Druckerzeuger, welcher insbesondere an das Hydrauliksystem einer Zugmaschine, wie eines Traktors oder eines Straßenfahrzeugs, anschließbar ist; und
- pneumatischer Druckerzeuger, welcher insbesondere von einer pneumatischen Luftdruckbremse einer Zugmaschine, wie eines Traktors oder Straßenfahrzeugs, gebildet und an welchen das Druckfluidreservoir über einen Anschluss anschließbar ist,
aufweist.

17. Verteilmaschine nach einem der Ansprüche 1 bis 16, **dadurch gekennzeichnet, dass** sie einen wenigstens zwei, insbesondere genau zwei, Kammern (1a, 1b) aufweisenden Behälter (1) mit je einer, am Boden einer jeden Kammer (1a, 1b) des Behälters (1) angeordneten Auslauföffnung (2a, 2b) mit je einem Dosierorgan (4a, 4b) umfasst, wobei jedes Dosierorgan (4a, 4b) mittels je eines Stellorgans (6a, 6b) auf- und zusteuerbar ist, wobei die Verteilmaschine ferner je ein unterhalb eines jeden Dosierorgans (4a, 4b) angeordnetes Verteilorgan zum Verteilen des pulver- und/oder partikelförmigen Gutes auf dem Boden aufweist.

18. Verteilmaschine nach einem der Ansprüche 1 bis 17, **dadurch gekennzeichnet, dass**
- das wenigstens eine Verteilorgan eine mit Wurfschaufeln versehene Verteilerscheibe aufweist; und/oder
- das wenigstens eine Dosierorgan (4a, 4b) einen Dosierschieber aufweist; und/oder
- das wenigstens eine Stellorgan (6a, 6b) des wenigstens einen Dosierorgans (4a, 4b) eine Kolben-/Zylindereinheit aufweist; und/oder
- das wenigstens eine Stellglied (19a, 19b) der Einrichtung zur Verstellung des Aufgabepunktes des pulver- und/oder partikelförmigem Gutes einen, insbesondere elektrischen, Stellzylinder aufweist.

## Claims

1. Distribution machine, in particular agricultural spreader or winter grit spreader, with at least one container (1) for holding material in the form of powder and/or particles, at least one discharge opening (2a, 2b) which is arranged on the floor of the container (1) and has a metering member (4a, 4b), which can be opened and closed in a controlled manner by means of an actuating member (6a, 6b), and a distribution member, which is arranged below the metering member (4a, 4b), for distributing the material in the form of powder and/or particles over the ground, **characterized in that** the distribution machine has a cleaning device which comprises at least one cleaning fluid line (8a, 8b; 10a, 10b; 20) which is arranged below the container (1) and is equipped with nozzles (9) which are oriented in the direction of at least one component of the distribution machine from the group consisting
- of the metering member (4a, 4b), wherein at least one first cleaning fluid line (8a, 8b) extends around the metering member (4a, 4b) substantially annularly or in the form of a ring segment,
- of the actuating member (6a, 6b) of the metering member (4a, 4b),
- of the distribution member, and
- of an actuating element (19a, 19b) of a device for adjusting the feeding point of the material in the form of powder and/or particles to the distribution member.

2. Distribution machine according to Claim 1, **characterized in that** the at least one cleaning fluid line (8a, 8b; 10a, 10b; 20) is fixed on a basic frame (7), which is arranged below the container (1), of the distribution machine.

3. Distribution machine according to Claim 1 or 2, **characterized in that** at least one first cleaning fluid line (8a, 8b) extends around
- the metering member (4a, 4b) and/or
- the distribution member
substantially annularly or in the form of a ring segment, wherein the nozzles (9) of the first cleaning fluid line (8a, 8b) are oriented in the direction
- of the metering member (4a, 4b) and/or
- of the distribution member.

4. Distribution machine according to one of Claims 1 to 3, **characterized in that** at least one second cleaning fluid line (10a, 10b) extends along the actuating member (6a, 6b) of the metering member (4a, 4b) and is equipped with nozzles (9) oriented in the direction of the actuating member (6a, 6b).

5. Distribution machine according to one of Claims 1 to 4, **characterized in that** at least one third cleaning fluid line (20) extends along the actuating element (19a, 19b) of the device for adjusting the feeding point of the material in the form of powder and/or particles to the distribution member and is equipped with nozzles (9) oriented in the direction of the actuating element (19a, 19b).

6. Distribution machine according to one of Claims 1 to 5, **characterized in that** the cleaning device furthermore comprises at least one further cleaning fluid line (11) which is arranged below the container (1) and is equipped with nozzles (9) oriented in the direction of the lower side of the container (1) and/or in the direction of a basic frame (7) of the distribution machine, wherein the further cleaning fluid line (11) extends in particular substantially annularly or in the form of a ring segment along a frame element (7a), which is arranged below the container (1), of the distribution machine.

7. Distribution machine according to one of Claims 1 to 6, **characterized in that** the cleaning device furthermore comprises at least one further cleaning fluid line (18a, 18b) which extends transversely over the rear side of the container (1), as viewed in the direction of travel of the distribution machine, and is equipped with nozzles oriented in the direction of the rear side of the container (1), wherein the cleaning fluid line (18a, 18b) extending transversely over the rear side of the container (1) in particular has a coupling piece, by means of which said cleaning fluid line makes fluidic contact in a releasable manner with a supply line arranged below the container (1).

8. Distribution machine according to Claims 6 and 7, **characterized in that** the supply line of the cleaning fluid line (18a, 18b), which extends transversely over the rear side of the container (1), is formed by the further cleaning fluid line (11) which extends substantially annularly or in the form of a ring segment along a frame element (7a), arranged below the container (1), of the distribution machine.

9. Distribution machine according to one of Claims 1 to 8, **characterized in that** the cleaning device furthermore has at least one further cleaning fluid line (14a, 14b) which extends annularly or in the form of a ring segment in the region of an upper circumferential edge of the container (1) and is equipped with nozzles (9) oriented in the direction of the inner walls of the container (1), wherein the at least one further cleaning fluid line (14a, 14b) extending annularly or in the form of a ring segment along an upper circumferential edge of the container makes fluidic contact in particular via the at least one further cleaning fluid line (18a, 18b) extending transversely over the rear side of the container (1).

10. Distribution machine according to Claim 9, **characterized in that** the at least one further cleaning fluid line (14a, 14b) extending annularly or in the form of a ring segment in the region of an upper circumferential edge of the container (1)
- is fixed on the upper end side or on the inner side of the container (1) or is integrated in the container (1); and/or
- is arranged on a protective mesh (15a, 15b), which is placed into the container (1), in particular in the circumferential region of the protective mesh (15a, 15b).

11. Distribution machine according to Claim 10, **characterized in that** the at least one further cleaning fluid line (14a, 14b) fixed in the circumferential region of the protective mesh (15a, 15b) has a coupling piece (17a, 17b), by means of which said cleaning fluid line makes fluidic contact in a releasable manner with the at least one cleaning fluid line (18a, 18b) extending transversely over the rear side of the container (1).

12. Distribution machine according to Claim 10 or 11, **characterized in that** the at least one further cleaning fluid line (14a, 14b) fixed in the circumferential region of the protective mesh (15a, 15b) has a branch line (16a, 16b) which extends as far as a point above the discharge opening (2a, 2b) of the container (1) and has at least one nozzle directed downwards in the direction of the discharge opening (2a, 2b).

13. Distribution machine according to one of Claims 1 to 12, **characterized in that** the cleaning fluid is selected from the group consisting of the compressed gases, in particular compressed air, and the liquids, in particular water.

14. Distribution machine according to one of Claims 1 to 13, **characterized in that** the cleaning device has a pressure fluid reservoir (13) into which the cleaning fluid line(s) (8a, 8b; 10a, 10b; 11; 18a, 18b) lead, wherein the cleaning fluid line(s) (8a, 8b; 10a, 10b; 11; 18a, 18b) is/are connected to the pressure fluid reservoir (13) in particular with the interconnection of control valves (12).

15. Distribution machine according to one of Claims 14, **characterized in that** the control valves (12) of the cleaning device are operatively connected to a control device of the distribution machine, which control device comprises in particular a control module which is mobile or is arranged in a stationary manner in the driver's cab of a towing machine, such as a tractor or road vehicle.

16. Distribution machine according to one of Claim 14 or 15, **characterized in that** the pressure fluid reservoir (13) has at least one pressure generator from the group consisting of
- an electric pressure generator which is connectable in particular to the electric power supply of a towing vehicle, such as a tractor or a road vehicle;
- a hydraulic pressure generator which is connectable in particular to the hydraulic system of a towing vehicle, such as a tractor or a road vehicle; and
- a pneumatic pressure generator which is formed in particular by a pneumatic air pressure brake of a towing vehicle, such as a tractor or road vehicle, and to which the pressure fluid reservoir is connectable via a connection.

17. Distribution machine according to one of Claims 1 to 16, **characterized in that** said distribution machine comprises a container (1) having at least two, in particular precisely two, chambers (1a, 1b), with one discharge opening (2a, 2b) each, arranged on the floor of each chamber (1a, 1b) of the container (1), with one metering member (4a, 4b) each, wherein each metering member (4a, 4b) can be opened and closed in a controlled manner by means of one actuating member (6a, 6b) each, wherein the distribution machine furthermore has a distribution member arranged below each metering member (4a, 4b) for distributing the material in the form of powder and/or particles over the ground.

18. Distribution machine according to one of Claims 1 to 17, **characterized in that**
- the at least one distribution member has a distributing disc provided with throwing blades; and/or
- the at least one metering member (4a, 4b) has a metering slide; and/or
- the at least one actuating member (6a, 6b) of the at least one metering member (4a, 4b) has a piston/cylinder unit; and/or
- the at least one actuating element (19a, 19b) of the device for adjusting the feeding point of the material in the form of powder and/or particles has an, in particular electric, actuating cylinder.

## Revendications

1. Machine d'épandage, notamment épandeur agricole ou épandeur hivernal, avec au moins un réservoir (1) pour recevoir un produit sous forme de poudre et/ou de particules, au moins une ouverture d'écoulement (2a, 2b) disposée au niveau du fond du réservoir (1) avec un organe de dosage (4a, 4b) dont l'ouverture et la fermeture peuvent être commandées à l'aide d'un organe de réglage (6a, 6b), ainsi qu'un organe d'épandage disposé en dessous de l'organe de dosage (4a, 4b) pour l'épandage du produit sous forme de poudre et/ou de particules sur le sol, **caractérisée en ce que** la machine d'épandage comporte un dispositif de nettoyage comprenant au moins une conduite de fluide de nettoyage (8a, 8b ; 10a, 10b ; 20) disposée sous le réservoir (1) et équipée de buses (9) orientées en direction d'au moins un composant de la machine d'épandage sélectionné dans le groupe composé par :
- l'organe de dosage (4a, 4b), au moins une première conduite de fluide de nettoyage (8a, 8b) s'étendant pour l'essentiel en forme d'anneau ou de segment annulaire autour de l'organe de dosage (4a, 4b) ;
- l'organe de réglage (6a, 6b) de l'organe de dosage (4a, 4b) ;
- l'organe d'épandage ; et
- un élément de réglage (19a, 19b) d'un dispositif servant au réglage du point cible du produit sous forme de poudre et/ou de particules sur l'organe d'épandage.

2. Machine d'épandage selon la revendication 1, **caractérisée en ce que** l'au moins une conduite de fluide de nettoyage (8a, 8b ; 10a, 10b ; 20) est fixée à un châssis de base (7), disposé sous le réservoir (1), de la machine d'épandage.

3. Machine d'épandage selon la revendication 1 ou 2, **caractérisée en ce qu'**au moins une première conduite de fluide de nettoyage (8a, 8b) s'étend pour l'essentiel en forme d'anneau ou de segment annulaire autour de :
- l'organe de dosage (4a, 4b) et/ou
- l'organe d'épandage, les buses (9) de la première conduite de fluide de nettoyage (8a, 8b) étant orientées en direction de :
- l'organe de dosage (4a, 4b) et/ou
- l'organe d'épandage.

4. Machine d'épandage selon l'une quelconque des revendications 1 à 3, **caractérisée en ce qu'**au moins une deuxième conduite de fluide de nettoyage (10a, 10b) s'étend le long de l'organe de réglage (6a, 6b) de l'organe de dosage (4a, 4b) et est équipée de buses (9) orientées en direction de l'organe de réglage (6a, 6b).

5. Machine d'épandage selon l'une quelconque des revendications 1 à 4, **caractérisée en ce qu'**au moins une troisième conduite de fluide de nettoyage (20) s'étend le long de l'élément de réglage (19a, 19b) du dispositif servant au réglage du point cible du produit sous forme de poudre et/ou de particules sur l'organe d'épandage et est équipé de buses (9) orientées en direction de l'élément de réglage (19a, 19b).

6. Machine d'épandage selon l'une quelconque des revendications 1 à 5, **caractérisée en ce que** le dispositif de nettoyage comprend en outre au moins une conduite de fluide de nettoyage (11) supplémentaire disposée sous le réservoir (1) équipée de buses (9) orientées en direction du côté inférieur du réservoir (1) et/ou en direction d'un châssis de base (7) de la machine d'épandage, la conduite de fluide de nettoyage (11) supplémentaire s'étendant notamment pour l'essentiel en forme d'anneau ou de segment annulaire le long d'un élément de châssis (7a), disposé sous le réservoir (1), de la machine d'épandage.

7. Machine d'épandage selon l'une quelconque des revendications 1 à 6, **caractérisée en ce que** le dispositif de nettoyage comprend en outre au moins une conduite de fluide de nettoyage (18a, 18b) supplémentaire, s'étendant transversalement au-dessus du côté arrière - considéré dans la direction de conduite de la machine d'épandage - du réservoir (1), ladite conduite étant équipée de buses orientées en direction du côté arrière du réservoir (1), la conduite de fluide de nettoyage (18a, 18b) s'étendant transversalement au-dessus du côté arrière du réservoir (1) comportant notamment une pièce de couplage à l'aide de laquelle elle est mise en contact sur le plan fluide, de façon amovible, avec une conduite d'amenée disposée sous le réservoir (1).

8. Machine d'épandage selon la revendication 6 et 7, **caractérisée en ce que** la conduite d'amenée de la conduite de fluide de nettoyage (18a, 18b) s'étendant transversalement au-dessus du côté arrière du réservoir (1) est formée de la conduite de fluide de nettoyage (11) supplémentaire s'étendant pour l'essentiel en forme d'anneau ou de segment annulaire le long d'un élément de châssis (7a), disposé sous le réservoir (1), de la machine d'épandage.

9. Machine d'épandage selon l'une quelconque des revendications 1 à 8, **caractérisée en ce que** le dispositif de nettoyage comporte en outre au moins une conduite de fluide de nettoyage (14a, 14b) supplémentaire s'étendant en forme d'anneau ou de segment annulaire dans la région d'un bord périphérique supérieur du réservoir (1), ladite conduite étant équipée de buses (9) orientées en direction des parois intérieures du réservoir (1), l'au moins une conduite de fluide de nettoyage (14a, 14b) supplémentaire s'étendant en forme d'anneau ou de segment annulaire le long d'un bord périphérique supérieur du réservoir, étant contactée sur le plan fluide, notamment via l'au moins une conduite de fluide de nettoyage (18a, 18b) supplémentaire s'étendant transversalement sur le côté arrière du réservoir (1).

10. Machine d'épandage selon la revendication 9, **caractérisée en ce que** l'au moins une conduite de fluide de nettoyage (14a, 14b) supplémentaire s'étendant en forme d'anneau ou de segment annulaire dans la région d'un bord périphérique supérieur du réservoir (1) :
- est fixée au côté avant supérieur ou au côté intérieur du réservoir (1) ou est intégrée dans le réservoir (1) ; et/ou
- est disposée au niveau d'une grille de protection (15a, 15b) insérée dans le réservoir (1), notamment dans la région de la périphérie de la grille de protection (15a, 15b).

11. Machine d'épandage selon la revendication 10, **caractérisée en ce que** l'au moins une conduite de fluide de nettoyage (14a, 14b) supplémentaire fixée dans la région de périphérie de la grille de protection (15a, 15b) comporte une pièce de couplage (17a, 17b) à l'aide de laquelle elle est en contact sur le plan fluide, de façon amovible, avec l'au moins une conduite de fluide de nettoyage (18a, 18b) s'étendant transversalement au-dessus du côté arrière du réservoir (1).

12. Machine d'épandage selon la revendication 10 ou 11, **caractérisée en ce que** l'au moins une conduite de fluide de nettoyage (14a, 14b) supplémentaire fixée dans la région de périphérie de la grille de protection (15a, 15b) comporte une dérivation (16a, 16b) s'étendant jusqu'à un point situé au-dessus de l'ouverture d'écoulement (2a, 2b) du réservoir (1) avec au moins une buse orientée vers le bas en direction de l'ouverture d'écoulement (2a, 2b).

13. Machine d'épandage selon l'une quelconque des revendications 1 à 12, **caractérisée en ce que** le fluide de nettoyage est sélectionné dans le groupe composé par les gaz sous pression, notamment l'air comprimé et les liquides, notamment l'eau.

14. Machine d'épandage selon l'une quelconque des revendications 1 à 13, **caractérisée en ce que** le dispositif de nettoyage comporte un réservoir de fluide sous pression (13) dans lequel la ou les conduites de fluide de nettoyage (8a, 8b ; 10a, 10b ; 11 ; 18a, 18b) débouchent, la ou les conduites de fluide de nettoyage (8a, 8b ; 10a, 10b ; 11 ; 18a, 18b) étant raccordées au réservoir de fluide sous pression (13) notamment en interconnectant des soupapes de commande (12).

15. Machine d'épandage selon la revendication 14, **caractérisée en ce que** les soupapes de commande (12) du dispositif de nettoyage sont reliées activement à un dispositif de commande de la machine d'épandage comprenant notamment un module de commande mobile ou stationnaire disposé dans l'habitacle d'un mototracteur, par exemple un tracteur ou un tramway.

16. Machine d'épandage selon la revendication 14 ou 15, **caractérisée en ce que** le réservoir de fluide sous pression (13) comporte au moins un générateur de pression sélectionné dans le groupe composé par :
- un générateur de pression électrique relié notamment à l'alimentation en courant électrique d'un mototracteur, par exemple un tracteur ou un tramway ;
- un générateur de pression hydraulique relié notamment au système hydraulique d'un mototracteur, par exemple un tracteur ou un tramway ; et
- un générateur de pression pneumatique pouvant être formé notamment d'un frein à air comprimé d'un mototracteur, par exemple un tracteur ou un tramway et auquel le réservoir de fluide sous pression est raccordé via un raccord.

17. Machine d'épandage selon l'une quelconque des revendications 1 à 16, **caractérisée en ce qu'**elle comprend au moins deux, notamment précisément deux, réservoirs (1) comportant des compartiments (1a, 1b) avec respectivement une ouverture d'écoulement (2a, 2b) disposée au niveau du fond de chaque compartiment (1a, 1b) du réservoir (1) avec respectivement un organe de dosage (4a, 4b), chaque organe de dosage (4a, 4b) pouvant être commandé pour s'ouvrir et se fermer à l'aide de respectivement un organe de réglage (6a, 6b), la machine d'épandage comportant en outre respectivement un organe d'épandage disposé en dessous de chaque organe de dosage (1a, 4b) pour l'épandage du produit sous forme de poudre et/ou de particules sur le sol.

18. Machine d'épandage selon l'une quelconque des revendications 1 à 17, **caractérisée en ce que** :
- l'au moins un organe d'épandage comporte un disque d'épandage pourvu de pales éjectrices ; et/ou
- l'au moins un organe de dosage (4a, 4b) comporte un coulisseau de dosage ; et/ou
- l'au moins un organe de réglage (6a, 6b) de l'au moins un organe de dosage (4a, 4b) comporte une unité piston-cylindre ; et/ou
- l'au moins un élément de réglage (19a, 19b) du dispositif servant au réglage du point cible du produit sous forme de poudre et/ou de particules comporte un cylindre de réglage, notamment électrique.
